# EUROPÄISCHE PATENTANMELDUNG

(11) **EP 4 092 441 A1**
(43) Veröffentlichungstag der Anmeldung: **23.11.2022**
(21) Anmeldenummer: 21175083.1
(22) Anmeldetag: 20.05.2021
(51) Int. Cl.: G01S 7/481, G01S 17/10, G01S 7/4863, G01S 7/4865, G01S 7/497

(54) **OPTISCHER SENSOR**

(71) Anmelder: Leuze electronic GmbH + Co. KG, 73277 Owen/Teck (DE)
(72) Erfinder: Feller, Bernhard, 86316 Friedberg (DE); Wendel, Dr. Simon, 73230 Kirchheim unter Teck (DE)
(74) Vertreter: Ruckh, Rainer Gerhard

(57) **Zusammenfassung**

Die Erfindung betrifft einen optischen Sensor (1) zur Erfassung von Objekten (5) in einem Überwachungsbereich mit einem Lichtstrahlen (2) emittierenden Sender (3), mit wenigstens einem Lichtstrahlen (2) empfangenden Empfänger (4), mit einer Ablenkeinheit (6), mittels derer die Lichtstrahlen (2) periodisch innerhalb des Überwachungsbereichs geführt sind, und mit einer Auswerteeinheit in welcher in Abhängigkeit von Empfangssignalen des Empfängers (4, 4') ein Objektfeststellungssignal generiert wird. Dem Empfänger (4, 4') ist eine Empfangsoptik zugeordnet, mittels derer auftreffende Lichtstrahlen (2) in räumlich getrennte Teilstrahlenbündel (9, 9') aufgespalten werden, wobei die Teilstrahlenbündel (9, 9') in unterschiedlichen Richtungen verlaufend zum Empfänger (4, 4') geführt sind.

## Beschreibung

Die Erfindung betrifft einen optischen Sensor gemäß dem Oberbegriff des Anspruchs 1.

Ein derartiger optischer Sensor bildet generell einen scannenden Sensor, insbesondere einen Flächendistanzsensor, mit welchem Objekte in einem Überwachungsbereich erfasst werden können.

Generell umfasst der optische Sensor einen Lichtstrahlen emittierenden Sender und einen Lichtstrahlen empfangenden Empfänger. Bei einem Flächendistanzsensor bilden der Sender und Empfänger einen Distanzsensor, der beispielsweise nach einem Impuls-Laufzeit-Verfahren arbeitet.

Die vom Sender emittierten Lichtstrahlen werden über eine Ablenkeinheit abgelenkt, so dass sie periodisch innerhalb des Überwachungsbereichs geführt sind, der je nach Ausbildung der Ablenkeinheit ein zwei- oder dreidimensionaler Bereich ist. Beispielsweise kann die Ablenkeinheit einen motorisch angetriebenen um eine Drehachse drehbaren Drehspiegel aufweisen, mittels dessen die Lichtstrahlen in einer Ebene abgelenkt werden.

Bei einem derartigen optischen Sensor sind dem Sender eine Sendeoptik und dem Empfänger eine Empfangsoptik zugeordnet, wobei sowohl die Sendeoptik als auch die Empfangsoptik von einer Linse gebildet ist.

Bei bekannten derartigen optischen Sensoren ist der Sender mit der Sendeoptik oder der Empfänger mit der Empfangsoptik in Verlängerung der Ablenkeinheit, insbesondere entlang dessen Drehachse angeordnet. Die jeweils andere Einheit ist über einen Ablenkspiegel an die Ablenkeinheit optisch angekoppelt. Dadurch ergeben sich unerwünscht große Bauhöhen des optischen Sensors, insbesondere auch deshalb, da es aus Gründen der Fremdlichtunempfindlichkeit vorteilhaft ist, eine große Brennweite für die die Empfangsoptik bildende Linse zu wählen.

Der Erfindung liegt die Aufgabe zugrunde einen optischen Sensor der eingangsgenannten Art bereitzustellen, welcher eine hohe Funktionalität und zugleich eine kompakte Bauform aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich mit einem Lichtstrahlen emittierenden Sender, mit wenigstens einem Lichtstrahlen empfangenden Empfänger, mit einer Ablenkeinheit, mittels derer die Lichtstrahlen periodisch innerhalb des Überwachungsbereichs geführt sind, und mit einer Auswerteeinheit in welcher in Abhängigkeit von Empfangssignalen des Empfängers ein Objektfeststellungssignal generiert wird. Dem Empfänger ist eine Empfangsoptik zugeordnet, mittels derer auftreffende Lichtstrahlen in räumlich getrennte Teilstrahlenbündel aufgespalten werden, wobei die Teilstrahlenbündel in unterschiedlichen Richtungen verlaufend zum Empfänger geführt sind.

Der erfindungsgemäße optische Sensor bildet einen scannenden Sensor, bei welchem von einem Sender emittierte Lichtstrahlen über eine Ablenkeinheit geführt werden. Durch die Ablenkeinheit werden die Lichtstrahlen periodisch innerhalb eines Überwachungsbereichs geführt, der je nach Ausbildung der Ablenkeinheit ein zwei- oder dreidimensionaler Bereich ist.

Dem Sender ist wenigstens ein Empfänger zugeordnet. Die Empfangssignale des Empfängers werden in einer Auswerteeinheit zur Generierung eines Objektfeststellungssignals ausgewertet. Das Objektfeststellungssignal gibt generell eine Information, ob ein Objekt im Überwachungsbereich vorhanden ist oder nicht.

Vorteilhaft bildet der optische Sensor einen Flächendistanzsensor. Dann bildet der Sender mit dem wenigstens einen Empfänger einen Distanzsensor, der vorteilhaft nach mit einem Impuls-Laufzeit-Verfahren arbeitet. Mit den ermittelten Distanzwerten und durch Bestimmung der aktuellen Ablenkposition der Ablenkeinheit können Positionen von Objekten im Überwachungsbereich bestimmt werden.

Erfindungsgemäß ist die Empfangsoptik des optischen Sensors derart ausgebildet, dass mit dieser die an einem Objekt im Überwachungsbereich zurückreflektierten und über die Ablenkeinheit geführten Lichtstrahlen in mehrere Teilstrahlenbündel aufgeteilt werden, wobei dann diese Teilstrahlenbündel in unterschiedlichen Richtungen zu den wenigstens einen Empfänger geführt sind.

Mit dieser Segmentierung der empfangenen Lichtstrahlen in Teilstrahlenbündel kann auf überraschend einfache Weise die Baugröße, insbesondere die Bauhöhe des optischen Sensors reduziert werden ohne dessen Nachweisempfindlichkeit zu beeinträchtigen. Die Führung der Teilstrahlenbündel erfolgt insbesondere seitlich zur Ablenkeinheit so dass großvolumige Optikaufbauten, die insbesondere nach oben oder unten über die Ablenkeinheit hervorstehen, vermieden werden können.

Gemäß einer besonders vorteilhaften, konstruktiv einfachen Variante ist es bereits ausreichend, wenn die Lichtstrahlen mittels der Empfangsoptik in zwei Teilstrahlenbündel aufgespalten werden.

Im einfachsten Fall ist bei dem optischen Sensor nur ein Empfänger vorgesehen, auf welchen alle Teilstrahlenbündel geführt sind.

Die durch die einzelnen Teilstrahlenbündel am Empfänger generierten Empfangssignale werden dann gemeinsam in der Auswerteeinheit ausgewertet, die hierzu nur ein Messsystem aufweist.

Insbesondere wenn der optische Sensor als distanzmessender Sensor ausgebildet ist, sind die Lichtwege der einzelnen Teilstrahlenbündel zum Empfänger exakt gleich lang ausgebildet, so dass mit allen Teilstrahlenbündeln exakt der gleiche Distanzwert erhalten wird. Dies gilt insbesondere dann, wenn der Sender und der Empfänger einen nach einem Impuls-Laufzeit-Verfahren arbeitenden Distanzsensor bilden.

Gemäß einer weiteren Variante sind mehrere Empfänger vorgesehen, auf welche selektiv einzelne Teilstrahlenbündel geführt sind.

Insbesondere ist jeweils ein Teilstrahlenbündel auf einen Empfänger geführt.

In diesem Fall weist die Auswerteeinheit vorteilhaft mehrere Messsysteme auf, wobei besonders vorteilhaft jedem Empfänger ein Messsystem zur Auswertung der Empfangssignale dieses Empfängers zugeordnet ist.

In diesem Fall ist es möglich, dass die Messergebnisse der Messsysteme zur Überprüfung und/oder zur Generierung eines Gesamt-Messergebnisses miteinander verglichen werden.

Dies kann in einer übergeordneten Einheit der Auswerteeinheit erfolgen.

Durch diese Mehrfachmessungen kann die Genauigkeit und Zuverlässigkeit bei den Objektdetektionen erheblich gesteigert werden.

Gemäß einer vorteilhaften Ausführungsform weist die Empfangsoptik mehrere Empfangsoptikelemente auf. Mit jedem Empfangsoptikelement wird ein Teilstrahlenbündel generiert.

Die so segmentierte Empfangsoptik erlaubt eine besonders platzsparende Anordnung relativ zum Sender und zur Ablenkeinheit wodurch besonders kompakte Bauformen des optischen Sensors realisiert werden können.

Besonders vorteilhaft sind die Empfangsoptikelemente seitlich zum Sender angeordnet.

Die Bauhöhe wird dann im Wesentlichen durch den Abstand zwischen Sender und Ablenkeinheit bestimmt. Die Empfangsoptikelemente führen nicht zu einer weiteren Erhöhung der Bauhöhe.

Gemäß einer konstruktiv vorteilhaften Ausgestaltung weist die Ablenkeinheit ein um eine Drehachse drehbares Ablenkelement auf.

Vorteilhaft ist das Ablenkelement von einem motorisch getriebenen Drehspiegel gebildet.

In diesem Fall sind die Empfangsoptikelemente quer zur Drehachse der Ablenkeinheit angeordnet.

Gemäß einer ersten Variante weist die Empfangsoptik als Empfangsoptikelement eine Spiegelanordnung auf.

Dabei ist besonders vorteilhaft, dass jeweils ein Spiegel zur Generierung eines Teilstrahlenbündels vorgesehen ist.

Die Spiegel stellen eine konstruktiv einfache Möglichkeit dar, um aus den in Richtung des Empfängers zu führenden Lichtstrahlen durch eine einfache insbesondere einmalige Umlenkung mehrere diskrete Teilstrahlenbündel, die dann in unterschiedlichen Richtungen verlaufen, zu erzeugen.

Um die Strahlführung der Teilstrahlenbündel noch besser vorgeben zu können sind vorteilhaft der Empfangsoptik weitere Optikelemente zugeordnet.

Diese Optikelemente können von Reflexions- oder Linseneinheiten gebildet sein.

Gemäß einer zweiten Variante weist die Empfangsoptik als Empfangsoptikelement eine Anordnung von lichtleitenden Körpern auf.

Dabei ist besonders vorteilhaft, dass jeweils ein lichtleitender Körper zur Generierung eines Teilstrahlenbündels vorgesehen ist.

Die lichtleitenden Körper können als Glaskörper oder Kunststoffkörper gebildet sein, in welchen die Lichtstrahlen geführt werden.

Vorteilhaft weisen lichtleitende Körper totalreflektierende oder verspiegelte Grenzflächen auf.

Mit den so gebildeten lichtleitenden Körpern lassen sich auch mehrfache, komplexe Lichtumlenkungen realisieren, wodurch die Richtungen und Charakteristiken der Teilstrahlenbündel genau vorgegeben werden können.

Dadurch kann vorteilhaft auf zusätzliche Optikelemente verzichtet werden.

Im einfachsten Fall besteht der oder jeder Empfänger aus einer Fotodiode. Für den Fall, dass der oder die Empfänger mit dem Sender Distanzsensoren bilden, die insbesondere nach einem Impuls-Laufzeit-Verfahren arbeiten, sind der oder die Empfänger vorteilhaft von Avalanche-Fotodioden gebildet.

Der optische Sensor kann vorteilhaft als Sicherheitssensor ausgebildet sein, der im Bereich der Sicherheitstechnik, insbesondere im Bereich des Personenschutzes eingesetzt werden kann. Beispielsweise kann ein solcher Sicherheitssensor zur Gefahrenbereichsüberwachung an gefahrbringenden Anlagen eingesetzt werden. Der Sicherheitssensor weist hierzu einen fehlersicheren Aufbau auf. Dies kann zum Beispiel durch eine redundante Auswerteeinheit realisiert werden. Insbesondere kann eine zweikanalige Auswerteeinheit mit zwei sich gegenseitig zyklisch überprüfenden Rechnereinheiten vorgesehen sein. Weiterhin können fehlersichere Ausgangsstrukturen zur fehlersicheren Ausgabe von Objektfeststellungssignalen vorgesehen sein. Diese können in Form von zweikanaligen Ausgängen gebildet sein.

Die Erfindung wird im Folgenden anhand der Zeichnungen erläutert. Es zeigen:
- Figur 1:: Erstes Ausführungsbeispiel des erfindungsgemäßen optischen Sensors.
- Figur 2:: Realisierungsbeispiel einer Empfangsoptik für den optischen Sensor gemäß Figur 1.
- Figur 3:: Zweites Ausführungsbeispiel des erfindungsgemäßen optischen Sensors.
- Figur 4:: Darstellung von Komponenten eines dritten Ausführungsbeispiels des erfindungsgemäßen optischen Sensors.
- Figur 5:: Darstellung von Komponenten eines vierten Ausführungsbeispiels des erfindungsgemäßen optischen Sensors.
- Figur 6:: Variante der Ausführungsform

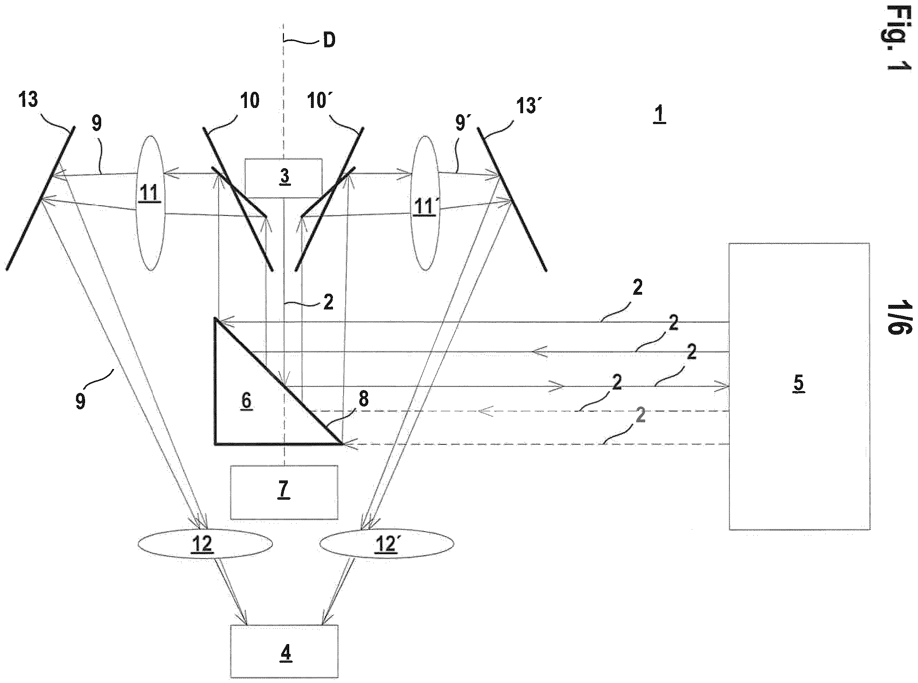

Figur 1 zeigt ein Ausführungsbeispiel des erfindungsgemäßen optischen Sensors 1 in Form eines Flächendistanzsensors, das heißt eines scannenden Distanzsensors. Zur Durchführung von Distanzmessungen weist der optische Sensor 1 einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 1 zeigt, werden die Lichtstrahlen 2 an einem zu detektierenden Objekt 5 reflektiert, wobei die entsprechende Lichtlaufzeit der Lichtimpulse zum Objekt 5 und zurück zum optischen Sensor 1 für die Distanzbestimmungen ausgewertet werden.

Der Sender 3, dem eine nicht dargestellte Sendeoptik nachgeordnet sein kann, ist vorteilhaft von einer Laserdiode gebildet. Der Empfänger 4 besteht im vorliegenden Fall aus einer Avalanche-Photodiode.

Die Sensorkomponenten des optischen Sensors 1 sind in einem nicht dargestellten Gehäuse integriert, wobei der Sender 3 sowie der Empfänger 4 stationär im Gehäuse angeordnet sind. Mit dem optischen Sensor 1 erfolgt eine Objektdetektion in einem flächigen Überwachungsbereich dadurch, dass die Lichtstrahlen 2 mittels einer Ablenkeinheit 6 periodisch abgelenkt werden. Die Ablenkeinheit 6 ist durch einen Antrieb 7 angetrieben und umfasst im vorliegenden Fall einen um eine Drehachse D drehbaren Drehspiegel 8, an dem die Lichtstrahlen 2 abgelenkt werden.

Der optische Sensor 1 weist eine nicht dargestellte Auswerteeinheit auf, in der die Empfangssignale des Empfängers 4 zur Generierung eines Objektfeststellungssignals auf. Das Objektfeststellungssignal kann ein binäres Schaltsignal sein, dessen Schaltzustände angeben, ob sich ein Objekt 5 im Überwachungsbereich befindet oder nicht.

Für den Einsatz im Bereich der Sicherheitstechnik ist der optische Sensor 1 als Sicherheitssensor ausgebildet und weist einen fehlersicheren Aufbau auf, der beispielsweise durch eine redundante Auswerteeinheit in Form zweier sich zyklisch gegenseitig überwachender Rechnereinheiten realisiert werden kann. Weiterhin kann ein fehlersicherer zweikanaliger Ausgang zur Ausgabe des Objektfeststellungssignals vorgesehen sein.

Erfindungsgemäß weist der erfindungsgemäße optische Sensor 1 eine Empfangsoptik auf, mit dem die vom Objekt 5 zurückreflektierten, über die Ablenkeinheit 6 geführten Lichtstrahlen 2 in mehrere separate Teilstrahlenbündel 9, 9' aufgespalten werden, wobei diese diskreten Teilstrahlenbündel 9, 9' in unterschiedlichen Richtungen verlaufend zum Empfänger 4 geführt sind. Hierzu ist die Empfangsoptik in mehrere Empfangsoptikelemente segmentiert, wobei jeweils mit einem Empfangsoptikelement ein Teilstrahlenbündel 9, 9' generiert wird.

Vorteilhaft sind die Empfangsoptikelemente seitlich zum Sender 3 in einer Ebene quer zur Drehachse verlaufend angeordnet.

Bei den dargestellten Ausführungsbeispielen sind stets zwei Empfangsoptikelemente zur Generierung von zwei Teilstrahlenbündeln 9, 9' vorgesehen, was jedoch nicht zwingend ist.

Bei dem Ausführungsbeispiel gemäß Figur 1 sind die Empfangsoptikelemente der Empfangsoptik jeweils von einem Spiegel 10, 10' gebildet. Die Spiegel 10, 10' liegen beidseits des Senders 3 und sind spiegelsymmetrisch zu diesem angeordnet.

Auf jeden Spiegel 10, 10' trifft ein Teil der vom Drehspiegel 8 reflektierten Lichtstrahlen 2, wodurch die Lichtstrahlen 2 in zwei symmetrische Teilstrahlenbündel 9, 9' aufgespalten werden.

Jedem Spiegel 10, 10' sind mit zwei Linsen 11, 12 beziehungsweise 11', 12' und einem Umlenkspiegel 13 beziehungsweise 13' weitere Optikelemente nachgeordnet, die die Teilstrahlenbündel 9, 9' auf den Empfänger 4 führen und vorteilhaft diese Teilstrahlenbündel 9, 9' auf den Empfänger 4 fokussieren.

Die Lichtwege bei den Teilstrahlenbündeln 9, 9' sind exakt gleich, so dass diese Empfangssignale am Empfänger 4 generieren, die exakt derselben Objektdistanz entsprechen.

Dementsprechend können die durch die Teilstrahlenbündel 9, 9' generierten Empfangssignale des Empfängers 4 in einem in der Auswerteeinheit integrierten Messsystem ausgewertet werden.

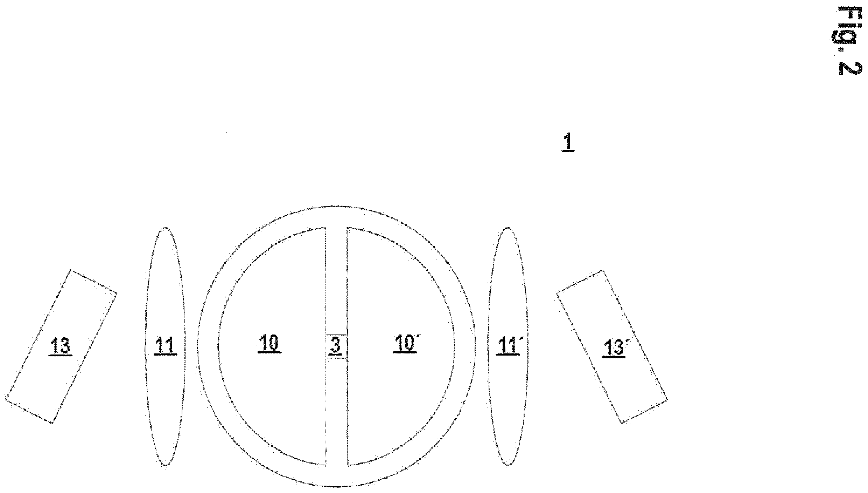

Figur 2 zeigt eine konstruktive Realisierung des Ausführungsbeispiels gemäß Figur 1 derart, dass die beiden Spiegel 10, 10' zu einer die Empfangsoptik bildenden Baueinheit zusammengefasst sind.

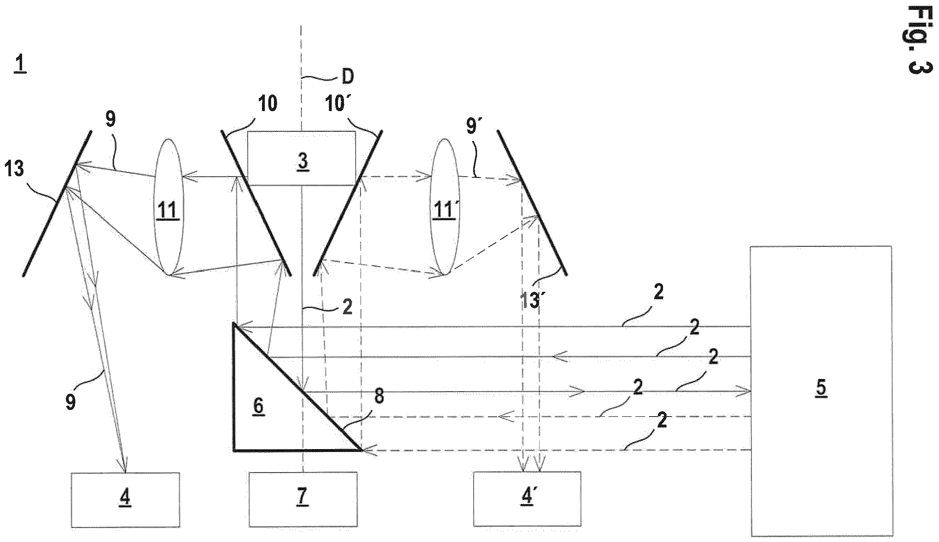

Figur 3 zeigt ein weiteres Ausführungsbeispiel des erfindungsgemäßen optischen Sensors 1. Die Empfangsoptik weist wieder zwei Spiegel 10, 10' auf, mit denen die vom Objekt 5 zurückreflektierten und über die Ablenkeinheit 6 geführten Lichtstrahlen 2 in zwei Teilstrahlenbündel 9, 9' aufgespalten werden. Im Unterschied zur Ausführungsform gemäß Figur 1 sind nun zwei Empfänger 4,4' vorgesehen. Das erste, mit dem Spiegel 10 generierte Teilstrahlenbündel 9 wird über die Linse 11 und den Umlenkspiegel 13 zum ersten Empfänger 4 geführt. Entsprechend ist das mit dem Spiegel 10' generierte Teilstrahlenbündel 9' über die Linse 11' und den Umlenkspiegel 13' zum zweiten Empfänger 4' geführt.

In der Auswerteeinheit sind zwei Messsysteme integriert, wobei das erste Messsystem die Empfangssignale des ersten Empfängers 4 und das zweite Messsystem die Empfangssignale des zweiten Empfängers 4' auswertet. Insbesondere werden dort Objektdistanzwerte berechnet.

In einer übergeordneten Einheit der Auswerteeinheit werden die in den Messsystemen generierten Messergebnisse verglichen. Damit können die Messergebnisse überprüft werden. Weiterhin können die Einzel-Messergebnisse, beispielsweise durch eine Mittelwert-Bildung zu einem Gesamt-Messergebnis verknüpft werden.

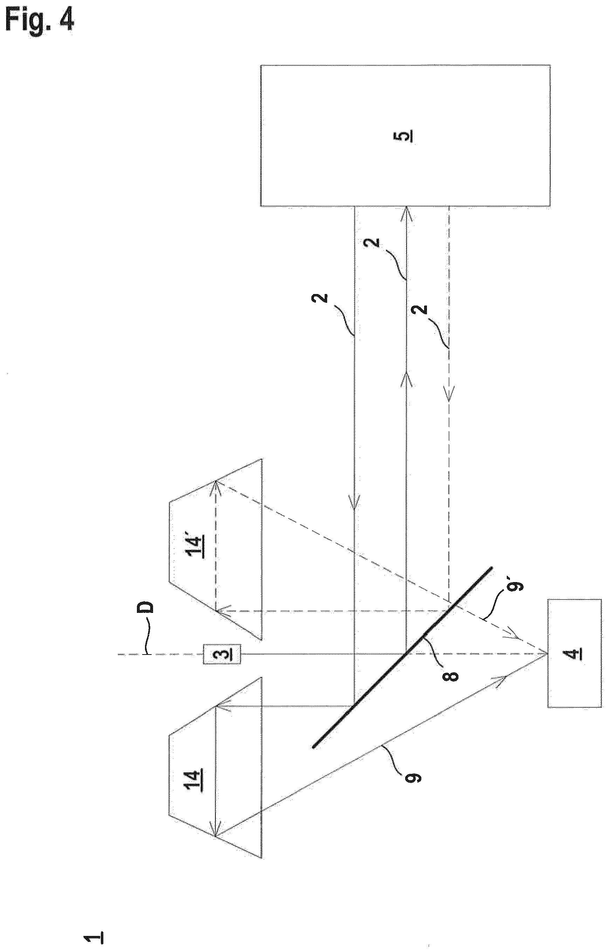

Figur 4 zeigt ein weiteres Ausführungsbeispiel des optischen Sensors 1. Dabei ist in Figur 4 nur der Drehspiegel 8 der Ablenkeinheit 6 dargestellt.

Bei dieser Ausführungsform sind die beiden Empfangsoptikelemente der Empfangsoptik von lichtleitenden Körpern 14, 14' gebildet. Die identisch ausgebildeten lichtleitenden Körper 14, 14' sind beidseits des Senders 3 spiegelsymmetrisch zu diesen angeordnet.

Die lichtleitenden Körper 14, 14' bestehen aus Glas oder Kunststoff, wobei diese ausgebildet sind, dort eingekoppeltes Licht zu leiten. Das Licht wird an den Grenzflächen der lichtleitenden Körper 14, 14' reflektiert, und zwar entweder durch Totalreflexion oder durch Verspiegelung der Grenzflächen. Die lichtleitenden Körper 14, 14' weisen im vorliegenden Fall einen prismenförmigen Querschnitt auf.

Mit den lichtleitenden Körpern 14, 14' werden aus den vom Objekt 5 zurückreflektierten und über die Ablenkeinheit 6 geführten Lichtstrahlen 2 zwei Teilstrahlenbündel 9, 9' generiert. Aufgrund der spezifisch gewählten Geometrie werden die Teilstrahlenbündel 9, 9' von den lichtleitenden Körpern 14, 14' direkt, das heißt ohne zusätzliche Optikelemente zum Empfänger 4, 4' geführt. Die Auswertung der durch die Teilstrahlenbündel 9, 9' am Empfänger 4, 4' generierten Empfangssignale erfolgt analog zur Ausführungsform gemäß Figur 1.

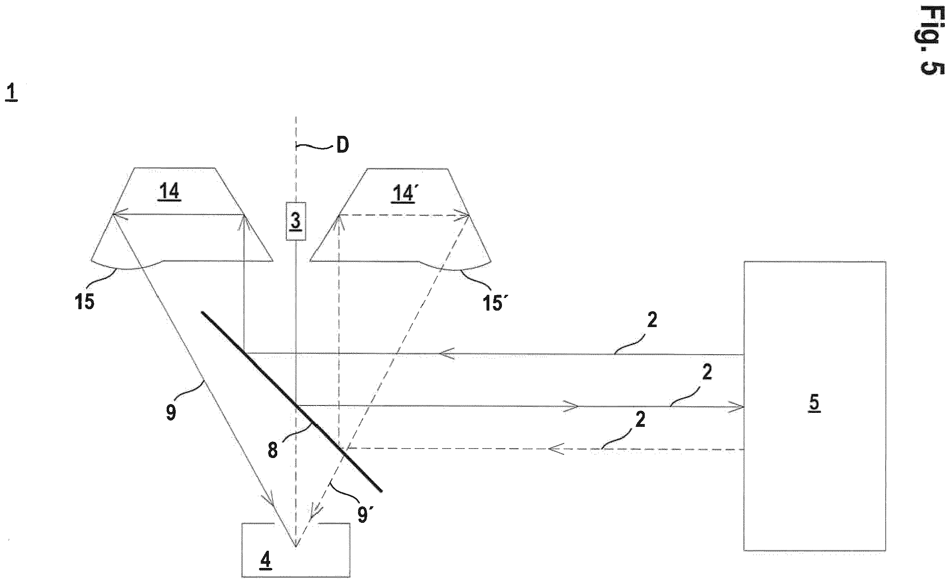

Figur 5 zeigt eine weitere Ausführungsform des optischen Sensors 1, die weitgehend der Ausführungsform gemäß Figur 4 entspricht.

Die Ausführungsform gemäß Figur 5 unterscheidet sich von der Ausführungsform gemäß Figur 4 nur dadurch, dass die lichtleitenden Körper 14, 14' im Austrittsbereich der Teilstrahlenbündel 9, 9' konvexe Ausformungen 15, 15' aufweisen, deren Grenzflächen strahlformende Flächen ausbilden. Diese haben eine Linsenwirkung derart, dass sie die Teilstrahlenbündel 9, 9' auf den Empfänger 4, 4' fokussieren.

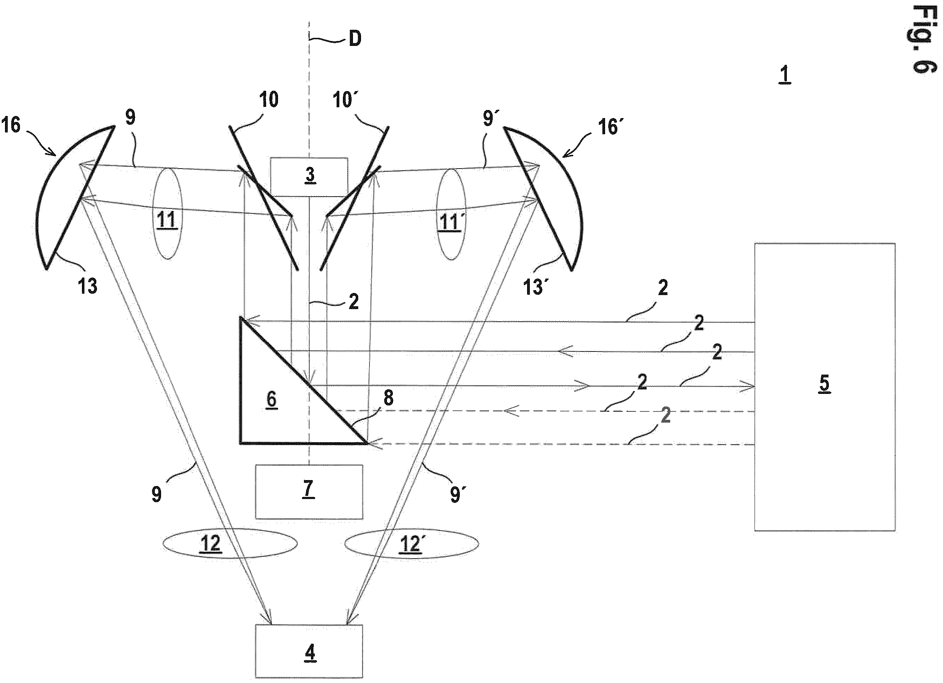

Figur 6 zeigt eine Variante der Ausführungsform gemäß Figur 1. Diese Variante unterscheidet sich von der Ausführungsform gemäß Figur 1 nur dadurch, dass die Linsen 11, 11' durch Hohlspiegel 16, 16' ersetzt sind.

### B ezugszei chenli ste

- (1): Optischer Sensor
- (2): Lichtstrahl
- (3): Sender
- (4): Empfänger
- (4'): Empfänger
- (5): Objekt
- (6): Ablenkeinheit
- (7): Antrieb
- (8): Drehspiegel
- (9): Teilstrahlenbündel
- (9'): Teilstrahlenbündel
- (10): Spiegel
- (10'): Spiegel
- (11): Linse
- (11'): Linse
- (12): Linse
- (12'): Linse
- (13): Umlenkspiegel
- (13'): Umlenkspiegel
- (14): lichtleitender Körper
- (14'): lichtleitender Körper
- (15): konvexe Ausformung
- (15'): konvexe Ausformung
- (16): Hohlspiegel
- (16'): Hohlspiegel

## Patentansprüche

1. Optischer Sensor (1) zur Erfassung von Objekten (5) in einem Überwachungsbereich mit einem Lichtstrahlen (2) emittierenden Sender (3), mit wenigstens einem Lichtstrahlen (2) empfangenden Empfänger (4, 4') mit einer Ablenkeinheit (6), mittels derer die Lichtstrahlen (2) periodisch innerhalb des Überwachungsbereichs geführt sind, und mit einer Auswerteeinheit in welcher in Abhängigkeit von Empfangssignalen des Empfängers (4, 4') ein Objektfeststellungssignal generiert wird, **dadurch gekennzeichnet, dass** dem Empfänger (4, 4') eine Empfangsoptik zugeordnet ist, mittels derer auftreffende Lichtstrahlen (2) in räumlich getrennte Teilstrahlenbündel (9, 9') aufgespalten werden, wobei die Teilstrahlenbündel (9, 9') in unterschiedlichen Richtungen verlaufend zum Empfänger (4, 4') geführt sind.

2. Optischer Sensor (1) nach Anspruch 1, **dadurch gekennzeichnet, dass** die Lichtstrahlen (2) mittels der Empfangsoptik in zwei Teilstrahlenbündel (9, 9') aufgespalten werden.

3. Optischer Sensor (1) nach Anspruch 1 oder 2, **dadurch gekennzeichnet, dass** mehrere Empfänger (4, 4') vorgesehen sind, auf welche selektiv einzelne Teilstrahlenbündel (9, 9') geführt sind.

4. Optischer Sensor (1) nach Anspruch 3, **dadurch gekennzeichnet, dass** jeweils ein Teilstrahlenbündel (9, 9') auf einen Empfänger (4, 4') geführt ist.

5. Optischer Sensor (1) nach einem der Ansprüche 1 oder 2, **dadurch gekennzeichnet, dass** nur ein Empfänger (4) vorgesehen ist, auf welchen alle Teilstrahlenbündel (9, 9') geführt sind.

6. Optischer Sensor (1) nach einem der Ansprüche 1 - 5, **dadurch gekennzeichnet, dass** die Empfangsoptik mehrere Empfangsoptikelemente aufweist, wobei mit jedem Empfangsoptikelement ein Teilstrahlenbündel (9, 9') generiert wird.

7. Optischer Sensor (1) nach Anspruch 6, **dadurch gekennzeichnet, dass** die Empfangsoptikelemente seitlich zum Sender (3) angeordnet sind.

8. Optischer Sensor (1) nach einem der Ansprüche 1 - 7, **dadurch gekennzeichnet, dass** die Ablenkeinheit (6) ein um eine Drehachse drehbares Ablenkelement aufweist.

9. Optischer Sensor (1) nach Anspruch 8, **dadurch gekennzeichnet, dass** die Empfangsoptikelemente quer zur Drehachse der Ablenkeinheit (6) angeordnet sind.

10. Optischer Sensor (1) nach einem der Ansprüche 8 oder 9, **dadurch gekennzeichnet, dass** das Ablenkelement von einem motorisch getriebenen Drehspiegel (8) gebildet ist.

11. Optischer Sensor (1) nach einem der Ansprüche 6 - 10, **dadurch gekennzeichnet, dass** die Empfangsoptik als Empfangsoptikelement eine Spiegelanordnung aufweist.

12. Optischer Sensor (1) nach Anspruch 11, **dadurch gekennzeichnet, dass** jeweils ein Spiegel (10, 10') zur Generierung eines Teilstrahlenbündels vorgesehen ist.

13. Optischer Sensor (1) nach einem der Ansprüche 6 - 10, **dadurch gekennzeichnet, dass** die Empfangsoptik als Empfangsoptikelement eine Anordnung von lichtleitenden Körpern (14, 14') aufweist.

14. Optischer Sensor (1) nach Anspruch 13, **dadurch gekennzeichnet, dass** jeweils ein lichtleitender Körper (14, 14') zur Generierung eines Teilstrahlenbündels (9, 9') vorgesehen ist.

15. Optischer Sensor (1) nach Anspruch 13 oder 14, **dadurch gekennzeichnet, dass** die lichtleitenden Körper (14, 14') totalreflektierende oder verspiegelte Grenzflächen aufweisen.

16. Optischer Sensor (1) nach einem der Ansprüche 13 - 15, **dadurch gekennzeichnet, dass** die lichtleitenden Körper (14, 14') strahlformende Flächen aufweisen.

17. Optischer Sensor (1) nach einem der Ansprüche 1 - 16, **dadurch gekennzeichnet, dass** der Empfangsoptik weitere Optikelemente zugeordnet sind.

18. Optischer Sensor (1) nach einem der Ansprüche 1 - 17, **dadurch gekennzeichnet, dass** der oder jeder Empfänger (4, 4') von einer Fotodiode oder einer Avalanche-Fotodiode gebildet ist.

19. Optischer Sensor (1) nach einem der Ansprüche 1 - 18, **dadurch gekennzeichnet, dass** die Empfangssignale des oder der Empfänger (4, 4') in einem Messsystem der Auswerteeinheit gemeinsam ausgewertet werden.

20. Optischer Sensor (1) nach einem der Ansprüche 1 - 19, **dadurch gekennzeichnet, dass** die Empfangssignale von Empfängern (4, 4') jeweils in einem Messsystem der Auswerteeinheit zur Generierung von Messergebnissen separat ausgewertet werden.

21. Optischer Sensor (1) nach Anspruch 20, **dadurch gekennzeichnet, dass** die Messergebnisse der Messsysteme zur Überprüfung und/oder zur Generierung eines Gesamt-Messergebnisses miteinander verglichen werden.

22. Optischer Sensor (1) nach einem der Ansprüche 1 - 21, **dadurch gekennzeichnet, dass** dieser ein Flächendistanzsensor ist.

23. Optischer Sensor (1) nach einem der Ansprüche 1 - 22, **dadurch gekennzeichnet, dass** dieser ein Sicherheitssensor ist.
